# EUROPEAN PATENT APPLICATION

(11) **EP 4 394 283 A1**
(43) Date of publication of application: **03.07.2024**
(21) Application number: 22861175.2
(22) Date of filing: 15.08.2022
(51) Int. Cl.: F25B 43/00

(54) **ACCUMULATOR**

(30) Priority: 24.08.2021 JP 2021136551
(71) Applicant: Fujikoki Corporation, Tokyo 158-0082 (JP)
(72) Inventor: HOSOKAWA, Kouji, Tokyo 158-0082 (JP); OE, Yuma, Tokyo 158-0082 (JP); OZAWA, Takeharu, Tokyo 158-0082 (JP); IWAYAMA, Toshimichi, Tokyo 158-0082 (JP)
(74) Representative: Ter Meer Steinmeister & Partner
(86) International application number: PCT/JP2022/030861
(87) International publication number: WO 2023/026886

(57) **Abstract**

Provided is an accumulator that has a superior assembly property and that enables to ensure a function of a refrigeration cycle even when vibration is applied. The accumulator includes a body, a pipe arranged on an inner side of the body eccentrically with respect to the body, a retaining member arranged between the pipe and the body, and a bag configured to accommodate a desiccant, wherein the bag is retained by being in contact with the body and the retaining member at a position where a distance between an inner circumference surface of the body and an outer circumference surface of the pipe is greatest.

## Description

### [Technical Field]

The present invention relates to an accumulator.

### [Background Art]

Receiver tanks, accumulators, etc. are used to store a refrigerant, which is circulated within a refrigeration cycle, in a gas-liquid separated manner. One type of such accumulators is equipped with a tank for separating the refrigerant flown therein into a gas phase refrigerant and a liquid phase refrigerant and storing the liquid phase refrigerant therein, wherein a desiccant is accommodated in the tank to remove moisture within the refrigerant.

If an entirety of the desiccant is soaked in the liquid phase refrigerant, rapid boiling of refrigerant (bumping phenomenon) originated by the desiccant may occur by the interior of the tank being decompressed when a compressor is started, causing pressure to occur in the tank and the tank may be vibrated, which may lead to generation of abnormal noise.

Meanwhile, in a case where the entirety of the desiccant is not soaked in the liquid phase refrigerant, the above-mentioned problem of generation of abnormal noise during starting of the compressor will not occur, but if the desiccant is positioned on a dropping passage of the liquid phase refrigerant having flown into the tank, the liquid phase refrigerant dropping in the tank may collide against the desiccant and splash, which may cause the liquid phase refrigerant to be sucked in through a suction port of the gas phase refrigerant, and there is a risk that the liquid phase refrigerant may be sucked into the compressor.

Therefore, according to the accumulator illustrated in Patent Literature 1, a portion or an entirety of the desiccant is arranged above a highest liquid level position (Lmax) of the liquid phase refrigerant within the tank when the compressor is stopped, and the desiccant is arranged at a position avoiding the dropping passage of the liquid phase refrigerant.

### [Citation List]

### [Patent Literature]

[Patent Literature 1] Japanese Patent Laid-Open Publication No. 2014-52139

### [Summary of Invention]

### [Technical Problem]

According to the accumulator of Patent Literature 1, the bag accommodating the desiccant is wound around a circumference of a suction piping and fixed by being tied thereto using a string-like fixing means such as a tying band. Therefore, it was time-consuming to assemble the accumulator, and the number of components were increased.

It may be an idea to fix the bag accommodating the desiccant without using a tying band, etc. However, if the accumulator is vibrated in a vehicle-mounted state, for example, the bag accommodating the desiccant may move up and down, causing the load owing to the movement to crush a portion of the desiccant into powder, which may flow into the piping as foreign matter and cause deterioration of the function of the refrigeration cycle.

Therefore, the present invention aims at providing an accumulator that has a superior assembly property and that enables to ensure the function of the refrigeration cycle even when vibration is applied.

### [Means to Solve the Problem]

In order to achieve the above-mentioned object, the accumulator according to the present invention includes
a body,
a pipe arranged on an inner side of the body eccentrically with respect to the body,
a retaining member arranged between the pipe and the body, and
a bag configured to accommodate a desiccant,
wherein the bag is retained by being in contact with the body and the retaining member at a position where a distance between an inner circumference surface of the body and an outer circumference surface of the pipe is greatest.

### [Effects of Invention]

The present invention enables to provide an accumulator that has a superior assembly property and that enables to ensure the function of the refrigeration cycle even when vibration is applied.

### [Brief Description of Drawings]

[FIG. 1] FIG. 1 is a vertical cross-sectional view of an accumulator according to a first embodiment.
[FIG. 2] FIG. 2 is a lateral cross-sectional view of the accumulator in planar view taken at line A-A of FIG. 1.
[FIG. 3] FIG. 3 is a front view of an outer pipe.
[FIG. 4] FIG. 4 is a side view of the outer pipe.
[FIG. 5] FIG. 5 is a top view of the outer pipe.
[FIG. 6] FIG. 6 is a view illustrating a part of a manufacturing process of a bag.
[FIG. 7] FIG. 7 is a view illustrating a state in which the bag is attached to a beam portion.
[FIG. 8] FIG. 8 is a vertical cross-sectional view of an accumulator according to a second embodiment.
[FIG. 9] FIG. 9 is a lateral cross-sectional view of the accumulator in planar view taken at line B-B of FIG. 8.
[FIG. 10] FIG. 10 is a front view of an outer pipe.
[FIG. 11] FIG. 11 is a side view of the outer pipe.
[FIG. 12] FIG. 12 is a top view of the outer pipe.

### [Description of Embodiments]

An accumulator 1 according to an embodiment of the present embodiment will be described below with reference to the drawings.

### (First Embodiment)

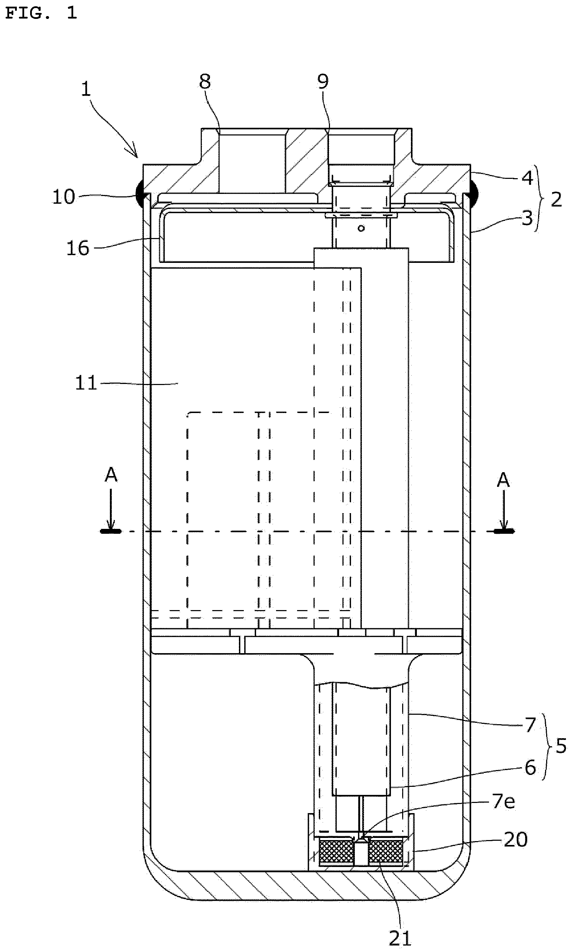

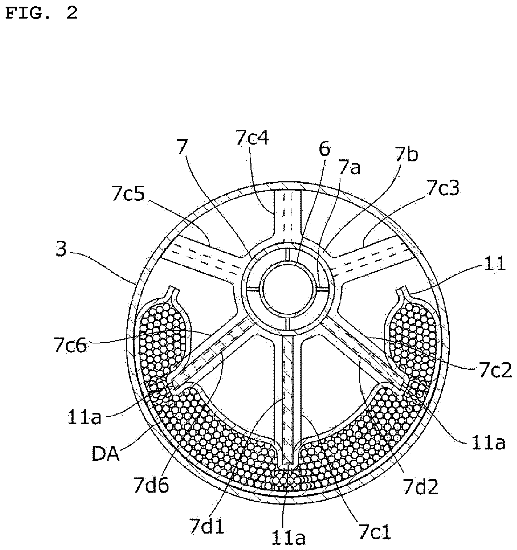

FIG. 1 is a vertical cross-sectional view of the accumulator 1 according to a first embodiment. FIG. 2 is a lateral cross-sectional view of the accumulator 1 in planar view taken at line A-A of FIG. 1. The accumulator 1 includes a tank main body 2, a double pipe 5 arranged within the tank main body 2, and a bag 11 accommodating a desiccant (moisture absorbent) DA.

The tank main body 2 is composed of a body 3 having a bottomed cylindrical shape with a top end opened, and a header 4 joined by girth welding to the body 3 via a weld portion 10 to seal an opening end of the body 3. The body 3 and the header 4 are both formed of a metal such as an aluminum alloy. In the present embodiment, the side of the header 4 is referred to as an upper side, and a bottom side of the body 3 is referred to as a lower side.

The header 4 formed in an approximately disk-like shape has a refrigerant inlet port 8 and a refrigerant outlet port 9 that are formed to pass therethrough in a vertical direction. An inner pipe 6 that extends to a vicinity of an inner bottom portion of the body 3 is connected to the refrigerant outlet port 9. A double pipe 5 is formed by externally attaching an outer pipe (hereinafter also simply referred to as pipe) 7 on an outer side of the inner pipe 6.

Below the header 4 is provided a gas-liquid separation member 16 having an inverted dish shape that separates a mixed refrigerant (refrigerant in which a gas phase refrigerant and a liquid phase refrigerant are mixed) flowing in through the refrigerant inlet port 8 into a liquid phase refrigerant having a high density with a compressor oil (hereinafter referred to as oil), and a gas phase refrigerant having a low density.

The inner pipe 6 is formed of a metal such as an aluminum alloy, having a lower end portion thereof opened and an upper end portion thereof connected to the refrigerant outlet port 9 of the header 4. Further, a lower portion of the inner pipe 6 is inserted to an inner side of a plurality of pipe ribs 7a (FIG. 2) disposed to protrude from an inner circumference surface of the outer pipe 7, by which the inner pipe 6 is held stably within the outer pipe 7.

The outer pipe 7 is formed of synthetic resin, and it is attached within the body 3 with the upper end portion thereof opened. A strainer 20 having a cylindrical shape and including a mesh member 21 formed by insert-molding metal or resin is disposed in a bottom portion of the outer pipe 7, and the strainer 20 is placed on an inner bottom surface of the body 3.

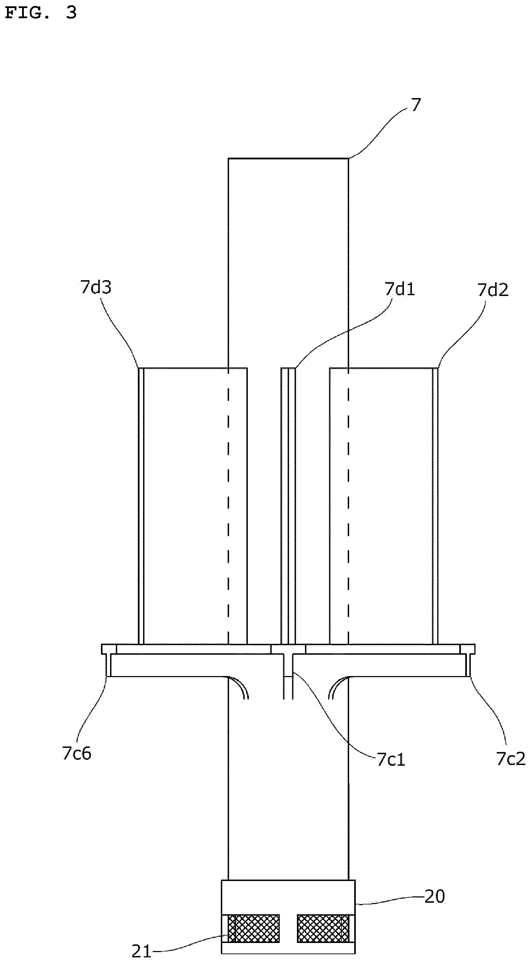

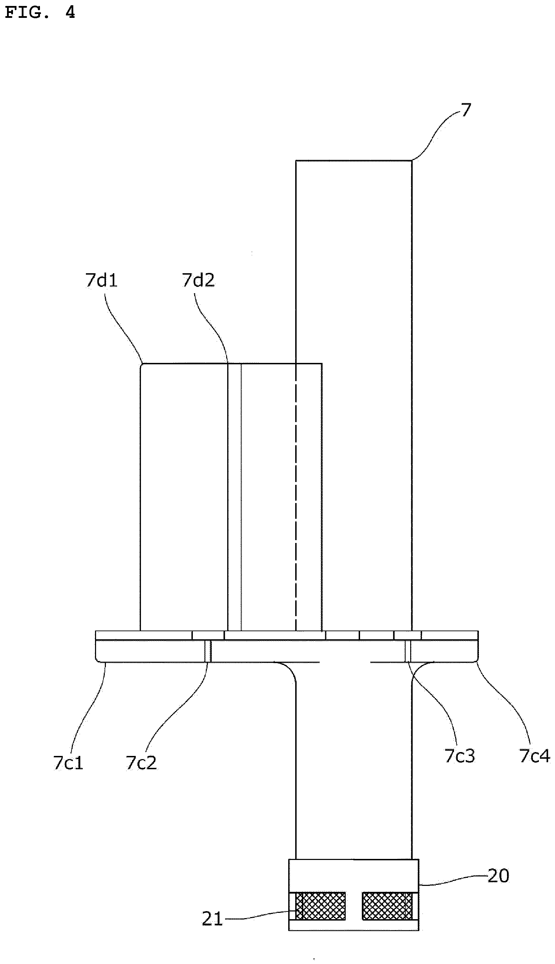

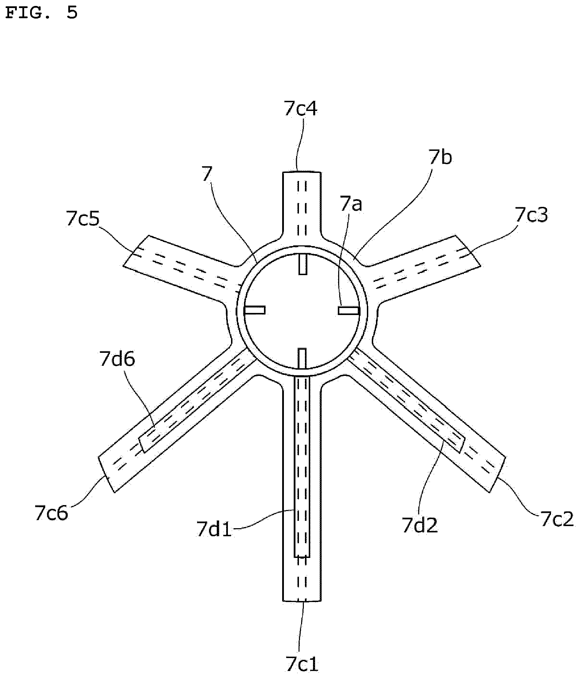

FIG. 3 is a front view of the outer pipe 7, FIG. 4 is a side view of the outer pipe 7, and FIG. 5 is a top view of the outer pipe 7. In the drawing, a flange-shaped portion 7b is connected consecutively to an outer circumference of the outer pipe 7 at a position, for example, approximately one-third of a total length from the lower end, and a plurality of (six in the present example) beam portions 7c1 to 7c6 which are formed at even intervals in the circumferential direction and extending outward in the radial direction are connected consecutively to an outer circumference of the flange-shaped portion 7b.

The beam portions 7c1 to 7c6 have a common T-shaped cross section orthogonal to the longitudinal direction thereof, and each distal end is in contact with an inner circumference of the body 3. Since the outer pipe 7 and the body 3 are eccentric, the lengths of the beam portions 7c1 to 7c6 are set accordingly. In the example, the beam portion 7c1 is the longest, and the beam portion 7c4 being opposed to the beam portion 7c1 interposing the outer pipe 7 is the shortest. Further, the beam portions 7c2 and 7c6 arranged on both sides of the beam portion 7c1 have equal lengths, and the beam portions 7c3 and 7c5 arranged on both sides of the beam portion 7c4 have equal lengths, wherein the beam portions 7c2 and 7c6 are longer than the beam portions 7c3 and 7c5. The spaces between the beam portions 7c1 to 7c6 serve as a flow channel.

Retaining members 7d1, 7d2, and 7d6 each having a rectangular plate shape are disposed in a manner connected consecutively to the upper surface of the beam portions 7c1, 7c2, and 7c6 and the outer circumference of the outer pipe 7. An approximately equal gap is formed between outer edges of the retaining members 7d1, 7d2, and 7d6 and the inner circumference of the body 3.

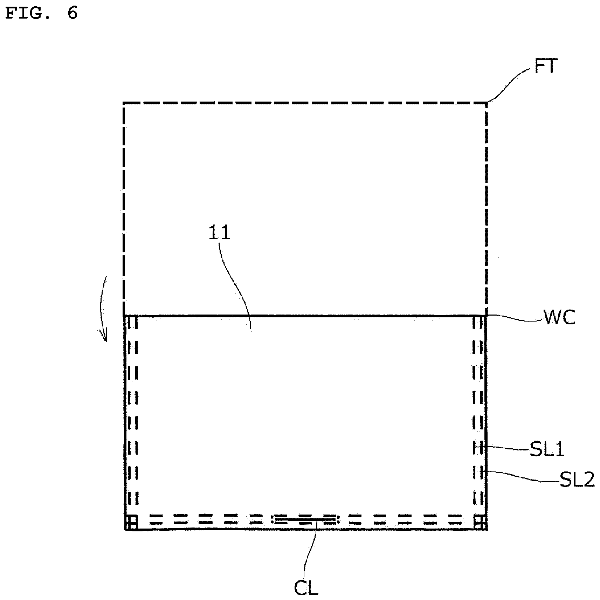

Next, the bag 11 will be described. FIG. 6 is a view illustrating a portion of a manufacturing process of the bag 11. At first, a cloth-like body FT such as felt having air permeability, water permeability, and necessary shape retaining property is cut into an approximately rectangular shape. Thereafter, the cloth-like body FT is folded back at a center line WC, and a desiccant DA (FIG. 2) is accommodated in the inner side thereof. Thereafter, superposed outer edges of the cloth-like body FT are sewn along double sewing lines SL1 and SL2 arranged in parallel shown by the dotted lines of FIG. 6, and the desiccant DA is sealed inside the bag 11. Then, a cutting line CL is formed between the sewing lines SL1 and SL2 at a center portion in the longitudinal direction of the bag 11. An opening is formed by pushing open the cutting line CL. The cutting line CL passes through the bag 11, but since the sewing line SL1 is formed on the inner side thereof, the desiccant DA within the bag 11 will not fall therethrough.

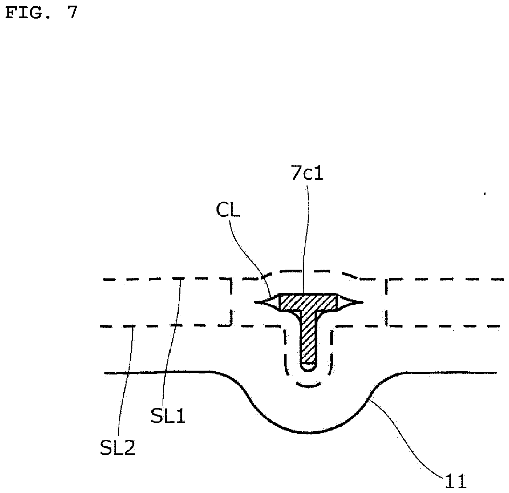

FIG. 7 is a view illustrating a state in which the bag 11 is attached to the beam portion 7c1, and it is an enlarged view in which an end portion of the beam portion 7c1 is viewed in a longitudinal direction. During assembly, the bag 11 is arranged so as to be in contact with the outer edges of the retaining members 7d1, 7d2, and 7d6. In this state, as illustrated in FIG. 7, the end portion of the beam portion 7c1 is arranged to pass through the opening formed by the cutting line CL of the bag 11. Thereafter, the outer pipe 7 is inserted together with the bag 11 to the body 3.

In an initial state, the thickness of the bag 11 is greater than a gap between the outer edges of the retaining members 7d1, 7d2, and 7d6 and the inner circumference of the body 3, such that assembly cannot be realized in that state. Thus, the desiccant DA is moved within the bag 11, and as illustrated in FIG. 2, three dents 11a corresponding to the retaining members 7d1, 7d2, and 7d6 are formed on the bag 11. The thickness of the bag 11 at the dents 11a is preferably 2/3 or smaller and 1/3 or greater of an average thickness of the bag 11 at areas other than the dents 11a.

The distance from the outer pipe 7 to the outer side surface of the bag 11 is made uniform by fitting the three dents 11a to the retaining members 7d1, 7d2, and 7d6. Thereby, the outer pipe 7 may be assembled to the body 3. In this state, the bag 11 is arranged at a position (maximum position) where the distance between the inner circumference surface of the body 3 and the outer circumference surface of the outer pipe 7 is greatest. It is preferable for the center portion of the bag 11 to be arranged at the maximum position. In the assembled state, the bag 11 is in contact with and retained by the retaining members 7d1, 7d2, and 7d6 and the inner circumference surface of the body 3, and a bottom portion of the bag 11 is supported on the upper surface of the beam portions 7c1, 7c2, and 7c6. Further, since the three dents 11a are fit to the retaining members 7d1, 7d2, and 7d6, relative movement of the bag 11 with respect to the circumference direction of the body 3 may be suppressed effectively even when vibration occurs.

Further, since the distal end of the beam portion 7c1 is fit to the opening formed by opening the cutting line CL of the bag 11, relative movement of the bag 11 in the up-down direction of the body 3 may be suppressed even when vibration occurs. Cutting lines into which the beam portions 7c2 and 7c6 may fit may also be formed on the bag 11. Since the bag 11 is arranged in the widest space between the outer circumference of the outer pipe 7 and the inner circumference of the body 3 while being assembled to the body 3, blocking of the flow of refrigerant may be suppressed.

The operation of the accumulator 1 configured as above will be described with reference to FIG. 1. In the following description, a configuration is illustrated as an example where the accumulator 1 is arranged between an evaporator and a compressor of the refrigeration cycle and where a gas refrigerant is generated by removing moisture contained in the refrigerant flowing from the evaporator and where the gas refrigerant is returned to the compressor.

In a state where the refrigerant is discharged from the evaporator, the refrigerant is conveyed to the accumulator 1 through a connecting piping (not shown). The refrigerant having reached the accumulator 1 is flown to the inner side of the body 3 through the refrigerant inlet port 8, collides against the gas-liquid separation member 16, and is separated into a high-density liquid phase refrigerant with oil and a low-density gas phase refrigerant (gas refrigerant).

The liquid phase refrigerant with oil after being subjected to gas-liquid separation is pooled within the body 3 by its own weight. In the process, the separation of the liquid phase refrigerant and oil advances, and oil is gathered below the liquid phase refrigerant. In this state, liquid level of the liquid phase refrigerant reaches a height position where a portion (approximately center) of the bag 11 accommodating the desiccant is immersed. Therefore, both the moisture contained in the liquid phase refrigerant and the hygroscopic moisture contained in the gas phase refrigerant are absorbed by the desiccant DA.

Meanwhile, the gas phase refrigerant having been subjected to gas-liquid separation flows in through the opening portion on the upper end of the outer pipe 7 and descends within the outer pipe 7. Thereafter, the gas phase refrigerant turns back at the bottom portion of the outer pipe 7 and flows into the inner pipe 6, ascends within the inner pipe 6 and is guided to the refrigerant outlet port 9. In this state, oil gathered at the bottom of the body 3 is sucked in through an oil return hole 7e, where it turns into a gas phase refrigerant containing abundant oil component, which is supplied from the refrigerant outlet port 9 through the connecting piping (not shown) to the compressor.

According to the present embodiment, the bag 11 may be attached easily and reliably by having the bag 11 retained by the retaining members 7d1, 7d2, and 7d6 and the inner circumference surface of the body 3 without using tying bands and the like. Further, since the distal end of the beam portion 7c1 is fit to the opening formed by opening the cutting line CL of the bag 11, relative movement of the bag 11 in the up-down direction of the body 3 may be suppressed even when vibration occurs. Therefore, the number of components of the accumulator 1 may be cut down, and the number of manufacturing steps may be reduced.

Since the bag 11 is arranged above and below interposing a center position of the outer pipe 7 in the longitudinal direction, the desiccant DA that is not immersed in the liquid refrigerant is increased, such that the occurrence of a bumping phenomenon may be suppressed. Further, by forming dents 11a on the bag 11, the movement of the desiccant DA accommodated within the bag 11 is restricted. Therefore, even when the accumulator 1 is vibrated, the crushing of the desiccant may be suppressed.

### (Second Embodiment)

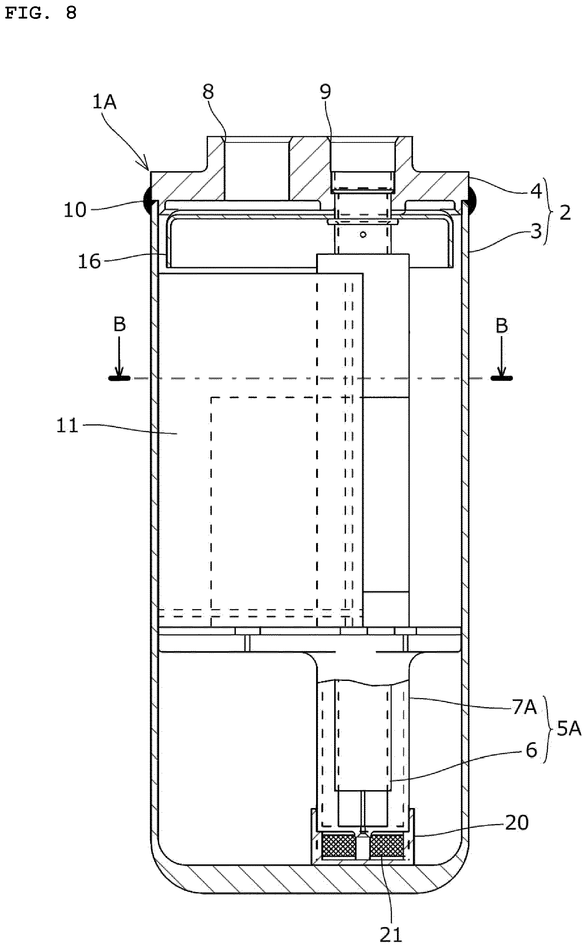

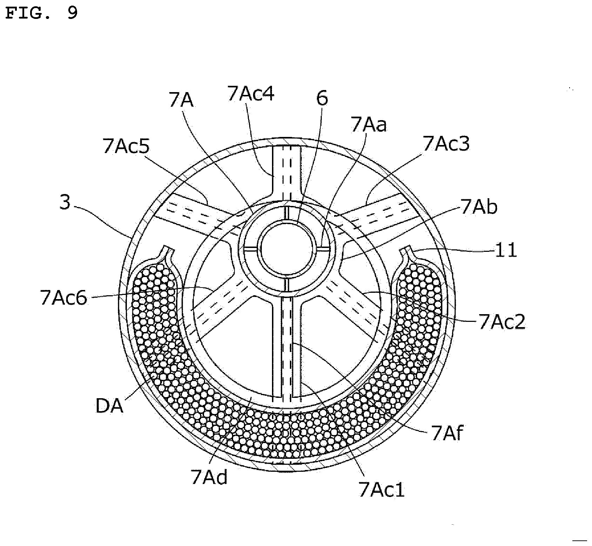

FIG. 8 is a vertical cross-sectional view of an accumulator 1A according to a second embodiment. FIG. 9 is a lateral cross-sectional view of the accumulator 1A in planar view taken at line B-B of FIG. 8. The accumulator 1A differs from the above-described embodiment in that a configuration formed on an outer side of an outer pipe 7A differs. The other configurations are denoted with the same reference numbers and detailed descriptions thereof are omitted. Further, the bag 11 is also the same as the first embodiment.

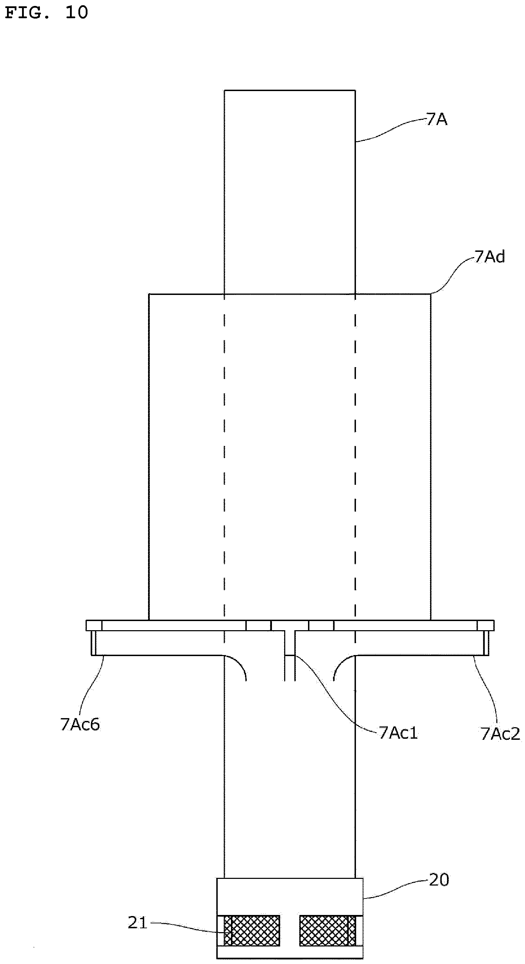

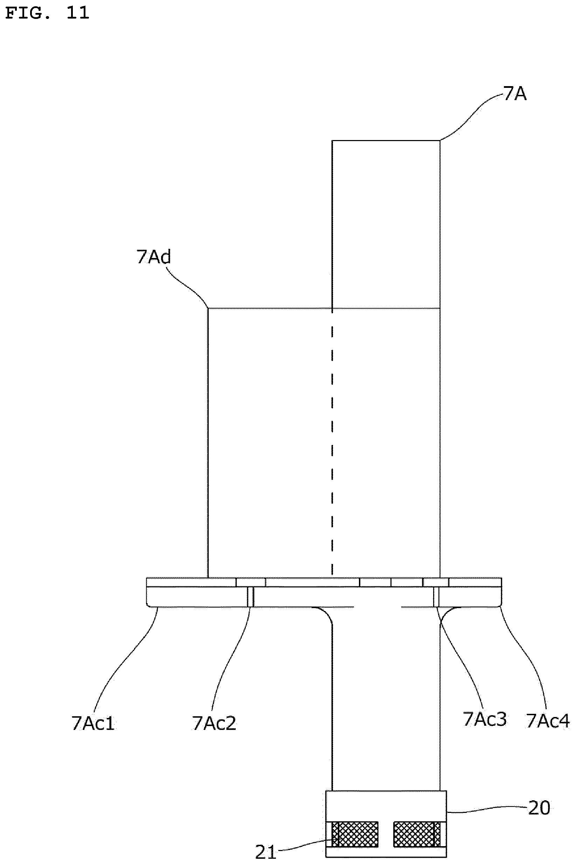

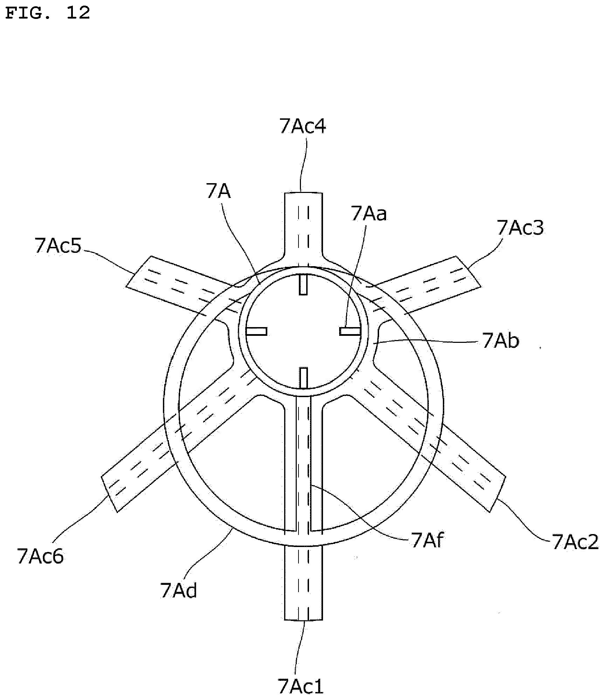

FIG. 10 is a front view of the outer pipe 7A, FIG. 11 is a side view of the outer pipe 7A, and FIG. 12 is a top view of the outer pipe 7A. As shown in the drawing, a flange-shaped portion 7Ab is connected consecutively to an outer circumference of the outer pipe 7A at a position approximately one-third of a total length from the lower end, and six beam portions 7Ac1 to 7Ac6 which are formed at even intervals in the circumferential direction and extending outward in the radial direction are connected consecutively to an outer circumference of the flange-shaped portion 7Ab. The cross-section of the flange-shaped portion 7Ab orthogonal to the longitudinal direction is T-shaped.

In the present embodiment, a plate-like retaining member is not disposed, and instead, a retaining member 7Ad having a circular pipe shape is connected consecutively to and across the upper surfaces of the beam portions 7 Ac1 to 7Ac6. Further, a reinforcement member 7Af having a rectangular plate shape is formed in a manner connected consecutively to an upper surface of the beam portion 7Ac1, an inner circumference of the retaining member 7Ad, and an outer circumference of the outer pipe 7. A portion of the retaining member 7Ad is joined to the outer pipe 7 above the beam portion 7Ac4, and when assembled, the retaining member 7Ad is formed to be approximately coaxial with the body 3. Therefore, an outer circumference surface of the retaining member 7Ad and an inner circumference surface of the body 3 are approximately at even distances across the entire circumference.

During assembly, the bag 11 is arranged to be wound around the outer circumference surface of the retaining member 7Ad with the beam portion 7 Ac1 arranged at the center. In this state, the opening formed by opening the cutting line CL of the bag 11 is passed through the end portion of the beam portion 7Ac1. Thereafter, the outer pipe 7 is inserted together with the bag 11 to the body 3.

Since the thickness of the bag 11 is approximately equal to the distance between the retaining member 7Ad and the body 3, the outer pipe 7 may be assembled to the body 3 by sliding the outer side surface of the bag 11 against the inner circumference surface of the body 3. In the assembled state, almost the entire surface of the outer side surface of the bag 11 is in contact with the retaining member 7Ad, almost the entire surface of the inner side surface of the bag 11 is in contact with the body 3, and the bottom portion of the bag 11 is supported on the upper surface of the beam portions 7Ad, 7Ac2, and 7Ac6. Therefore, even when vibration occurs, the relative movement of the bag 11 with respect to the circumferential direction of the body 3 may be suppressed. Further, since the distal end of the beam portion 7 Ac1 is fit to the opening formed by opening the cutting line CL of the bag 11, even when vibration occurs, the relative movement of the bag 11 with respect to the up-down direction of the body 3 may be suppressed. The upper end of the bag 11 is preferably positioned higher than the upper end of the retaining member 7Ad.

The present embodiment has been illustrated above with reference to the embodiments, but the present invention is not limited to the above-mentioned embodiments, and various modifications are enabled within the scope of the invention.

### [Reference Signs List]

1, 1A accumulator
2 tank main body
3 body
4 header
5, 5A double pipe
6 inner pipe
7, 7A outer pipe
8 refrigerant inlet port
9 refrigerant outlet port
11 bag
20 strainer
CL cutting line

## Claims

1. An accumulator comprising:
a body;
a pipe arranged on an inner side of the body eccentrically with respect to the body;
a retaining member arranged between the pipe and the body; and
a bag configured to accommodate a desiccant,
wherein the bag is retained by being in contact with the body and the retaining member at a position where a distance between an inner circumference surface of the body and an outer circumference surface of the pipe is greatest.

2. The accumulator according to claim 1, further comprising
a plurality of beam portions configured to extend from an outer circumference of the pipe toward the body,
wherein the retaining member is a plate member having a rectangular shape that is connected consecutively to at least one of the beam portions.

3. The accumulator according to claim 2,
wherein a dented portion formed on the bag is fit to an edge of the plate member having a rectangular shape.

4. The accumulator according to claim 1, further comprising
a plurality of beam portions configured to extend from an outer circumference of the pipe toward the body,
wherein the retaining member is a circular pipe-shaped member that is connected consecutively to at least one of the beam portions.

5. The accumulator according to claim 4,
wherein the circular pipe-shaped member is arranged approximately coaxially with the body.

6. The accumulator according to any one of claims 2 to 5,
wherein the bag includes an opening formed of a cutting line, and an end portion of the beam portion is configured to fit to the opening.

7. The accumulator according to claim 6,
wherein the cutting line is formed between double sewing lines sewing an edge of the bag.
